(19) Europäisches Patentamt

European Patent Office

Office européen des brevets

(11) **EP 4 156 860 A1**

(12) **EUROPEAN PATENT APPLICATION**

(43) Date of publication:
**29.03.2023   Bulletin 2023/13**

(21) Application number: **21199608.7**

(22) Date of filing: **28.09.2021**

(51) International Patent Classification (IPC):
***H05B 6/70*** (2006.01)

(52) Cooperative Patent Classification (CPC):
**H05B 6/705**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ELECTROLUX APPLIANCES
AKTIEBOLAG
105 45 Stockholm (SE)**

(72) Inventors:
• **DE ANGELIS, Andrea**
  **33080 Porcia (IT)**
• **MAZZON, Claudio**
  **91541 Rothenburg ob der Tauber (DE)**
• **RODRIGUEZ CEPEDA, Pablo**
  **91541 Rothenburg ob der Tauber (DE)**

(74) Representative: **Electrolux Group Patents
AB Electrolux
Group Patents
S:t Göransgatan 143
105 45 Stockholm (SE)**

(54) **A HEATING APPLIANCE AND METHOD OF OPERATING A HEATING APPLIANCE**

(57)    The underlying invention is in particular directed to a heating appliance and a method for operating the heating appliance. According to an aspect related to the appliance comprises a cavity (4), at least one radiation sources (5), at least one control unit (6), and a sensor device (7); wherein the control unit (6) is adapted to control a heating process (501 - 508; 601 - 608, 701 - 712) for heating the one or more objects (2, 3) in a closed loop control, the closed loop control comprising controlling (201) and operating the at least one radiation source (5) to generate and supply into the cavity (4) a high frequency radiation (9) according to at least one radiation characteristic associated with a forward power magnitude (FP); continuously and repeatedly during the heating process determining (202) a compound reflection loss (CRL); monitoring (203) the determined compound reflection loss (CRL); and based on the monitoring of the compound reflection loss (CRL), changing (204) the radiation characteristic of the at least one radiation source (5).

FIG.1

## Description

The underlying invention is related to a heating appliance, such as a cooking appliance, and to a method of operating a heating appliance, in particular a cooking appliance.

## Background

Current technology uses different types of heating elements for heating objects in a cooking oven. One example is related to dielectric heating, where an object, such as food, is placed in a cavity and irradiated with electromagnetic radiation in the radio frequency and/or microwave range. Examples for such cooking appliances are microwave ovens.

In the field of microwave cooking, some solutions have been proposed for controlling, at least in part, the cooking process based on a detected reflected power magnitude of radiation reflected back from the cavity.

With regard to heating and cooking using electromagnetic radiation for dielectric heating, it is desirable to further improve the capabilities for automating heating and cooking based on the electromagnetic radiation used for dielectric heating.

## Description of embodiments according to the invention

It is an object of the invention to provide an alternative or improved way for using electromagnetic radiation for, at least in part, controlling heating processes, specifically cooking processes, in a semi-automated or in a fully automated manner.

This object is solved by an appliance and a method according to the independent claims. Exemplary embodiments result from the dependent claims and the exemplary embodiments described below.

According to an embodiment, a heating appliance, in particular a cooking appliance is provided, the heating appliance comprising a cavity, at least one, preferably a plurality of, radiation sources (or: radiation feeding modules), at least one control unit, and at least one sensor device. A sensor device may comprise one or more sensors for sensing radiation emitted from the radiation sources and reflected back to a radiation source. Preferably, each radiation source or radiation feeding module has an associated sensor device to sense radiation feedback from the cavity, i.e. incoming radiation from the cavity as a response to the radiation sources emitting radiation into the cavity. Such radiation may be considered reflected or backward radiation.

The radiation sources may, respectively, comprise, a radiation generator, e.g. a magnetron, preferably a solid state power amplifier, and one or more antennas for emitting the radiation. The radiation may be generated in the microwave or radiofrequency range.

The control unit may comprise an electronic circuitry, which may comprise one or more digital processors, in particular signal processors. The processors may be operatively connected or coupled to the radiation sources, and other electronic components of the appliance as required, at least for controlling the operation of the radiation sources, for example. The control unit may comprise a central processing unit operatively coupled at least to the radiation sources, and/or may comprise one or more local processing units respectively associated with one or more of the radiation sources.

The cavity is configured for receiving therein one or more objects, such as food objects, to be heated, in particular cooked, based on electromagnetic radiation via dielectric processes. The cavity may comprise cavity walls and a front opening associated with a door for closing and opening the opening.

The cavity is configured for being irradiated with high-frequency electromagnetic radiation, in particular in the radiofrequency and/or microwave frequency range. As known from common microwave devices or ovens, the cavity, e.g. the cavity walls defining the cavity, are generally impermeable to radiation irradiated into the cavity such that the radiation is substantially confined to the volume of the cavity for heating a food object placed within the cavity. The cavity walls may comprise feeding ports for feeding radiation from the radiation sources into the cavity. The feeding ports may for example be implemented as cutouts in the walls, and may be associated with waveguides for guiding the radiation from the radiation source into the cavity. In embodiments, the radiation source may radiate directly into the cavity, i.e. substantially without any interposed waveguides.

The electromagnetic radiation generated by the radiation sources and irradiated into the cavity may, in embodiments, be used for heating, in particular cooking, the object in the cavity and/or for scanning the cavity with regard to the presence of an object in the cavity and/or with regard to a heating status or object status of the object placed within the cavity. As mentioned, the radiation may be one of microwave radiation or radiowave radiation

In the embodiments, in which the electromagnetic radiation is also used for heating the object (i.e. not only for scanning), the heating appliance and a corresponding operating method may involve heating and scanning, in particular a heating mode and a scanning mode. The heating or heating mode involves irradiating the cavity with electromagnetic radiation suitable for heating the object. The scanning or scanning mode involves irradiating the cavity with electromagnetic radiation suitable for scanning the cavity with regard to the presence of an object, such as food, and/or with regard to the status, e.g. the heating status and/or configuration of the object. The heating and scanning, in particular the heating and scanning mode, may be carried out consecutively, such as one after the other or alternatingly; or these two modes may be carried out at least in part in parallel, e.g. simultaneously. For example, during the heating or heating mode, the reflected power may be, e.g. constantly or repeatedly, monitored, and such monitoring, representing a scanning or scanning mode. In this connection, the heating mode is associated with an operation of the radiation sources for emitting heating radiation, and the scanning mode is associated, for example, with an operation of the sensor device for sensing or detecting reflected radiation. In particular, the sensor device may be operated in parallel with the radiation sources.

In embodiments and operating modes in which the one or more objects are not yet heated, or the one or more objects are heated with an external heating source or a heating source different from a microwave or radiofrequency heating source, such as a resistance heating source, the radiation sources and sensor devices may be operated as scanners for scanning the cavity and the objects, without, however, heating the one or more objects. This means, that the underlying invention for determining the heating/cooking status or food status of the one or more objects based on the radiation sources may be used in appliances comprising heating sources other than microwave heating elements. In principle, the invention may also be used with multi-purpose ovens including microwave heating, resistance heating and others. In a preferred embodiment, the appliance is a microwave heating appliance with the radiation sources, in particular the radiation generated by the radiation sources, are used not only for heating but also for scanning the cavity.

In preferred embodiments, however, the radiation sources are used for heating or cooking, and the sensor devices are used for scanning the cavity and the one or more objects with regard to food status, cooking progress, food distribution etc.. Scanning the cooking, heating, or food status may be carried out concurrently with dielectrically heating the object with the electromagnetic radiation

The at least one radiation source may be arranged and configured for generating and supplying (or: irradiating) high frequency radiation in the radio frequency range and/or microwave frequency range into the cavity. As mentioned, the high frequency radiation may be generated for heating the object and/or for scanning the cavity with regard to the presence or configuration (or: status, in particular heating status) of the object.

As explained, the cavity and the at least one radiation source (or heating source) are adapted to heat or cook, in particular dielectrically heat or cook, based on radiation absorption, one or more objects, such as foodstuff, placed within the cavity. In case of dielectric heating or cooking, the heating is associated with dielectric processes associated with radiation absorption. In case of resistance heating, where radiation sources and sensor devices may be used for scanning, the heating is associated with radiant heat absorption.

According to the embodiment of claim 1, the control unit is adapted to determine, based on sensor signals from the sensor device a compound reflection loss.

The compound reflection loss (referred to herein as CRL) is defined as the quotient of the total reflected (or: backward) power magnitude (TRP) reflected back from the cavity in response to supplying the radiation into the cavity, and the total forward (or: incident) power magnitude (TFP) of the radiation supplied by all of the radiation sources into the cavity. The term "total" in this connection shall mean that the cavity as a whole is considered rather than individual radiation sources. Further, the term "total" shall relate to the sum of respective power magnitudes, respectively present at a particular point in time (e.g. the measurement or scanning time).

In terms of mathematics, the compound reflection loss CRL, which may be calculated by the control device, may be defined as follows:

$$CRL = TRP / TFP.$$

TRP may be calculated as the sum of the power magnitudes reflected back to the individual radiation sources (measured at a particular point in time), and TFP may be calculated as the sum of the power magnitudes irradiated into the cavity (corresponding to the point in time):

$$TRP = \sum_i RPi$$

$$TFP = \sum_i FPi,$$

wherein:

- the integer i represents a natural number $\geq 1$, representative for the number of radiation sources comprised by the appliance and provided and operated for irradiating the electromagnetic radiation into the cavity;
- $RP_i$ relates to the reflected power magnitude reflected back from the cavity to radiation source i in response to one or more, in particular all radiation sources, irradiating electromagnetic radiation into the cavity;
- $FP_i$ relates to the forward power magnitude of the electromagnetic radiation irradiated by radiation source i into the cavity.

As explained in further detail herein, the sensor device may be adapted to sense (or: measure or determine) the values $RP_i$ and $FP_i$, i.e. a reflected (or: backward) power magnitude, and a forward power magnitude originating from electromagnetic radiation irradiated into the cavity by the radiation sources. The sensor device may comprise one or more sensors for determining the reflected and forward power magnitudes. The one or more sensors may comprise microwave and /or radiofrequency sensitive elements for sensing (or: detecting) the reflected or backward radiation. The sensor device, comprising for example electronic circuitry and one or more signal processors, may derive or determine from signals generated by the one or more sensors the values $RP_i$ and $FP_i$, for example.

In this context it shall be noted that the terms "backward" and "reflected" shall relate to the same physical aspect in that radiation that is irradiated into the cavity is reflected back (or: scattered backward) to a radiation source. The term forward shall relate to the aspect of irradiating electromagnetic radiation into the cavity.

According to the given embodiment according to claim 1, the control unit is adapted to control a heating process for heating the one or more objects in a closed loop control. For this, electronic circuitry and one or more processors of the control unit may be operatively connected to the radiation sources (or heating sources), and control the heating power applied to the one or more objects for heating them.

The term "closed loop control" shall in particular relate to a control scheme in which the emission of the electromagnetic radiation into the cavity is correlated with (or: dependent on, or controlled based on) a response of the irradiated system, e.g. a response of the one or more objects in the cavity due to incident forward radiation. In particular, the response is associated with the backward radiation.

As will be explained in further detail below, the control variable for the closed loop control is the CRL (the compound reflection loss). The closed loop control may involve a continuous measurement, or a sequence of consecutive measurement points or intervals in which the CRL is determined while a heating process is running for heating the one or more objects in the cavity. in particular, the CRL may be determined (or: measured or monitored) continuously during the heating process.

The operation for determining the TFP and the TRP for calculating the CRL in the measurement points or intervals may be referred to as a "scan" in which the state of the one or more objects is captured (scanned) via the involved variables (TRP, TFP, CRL).

According to the given embodiment according to claim 1, the closed loop control, to be carried out by the control device, comprises:

d1) controlling (or: operating) the at least one radiation source to generate and supply into the cavity a high frequency radiation according to at least one radiation characteristic associated with a forward power magnitude;
d2) continuously and repeatedly during the heating process determining the compound reflection loss CRL calculated as the ratio of the total reflected (or: backward) power magnitude TRP of radiation reflected back from the cavity, and the total forward power magnitude TFP of radiation emitted into the cavity by the at least one radiation source;

d3) monitoring the determined compound reflection loss CRL; and
d4) based on the monitoring of the compound reflection loss CRL, adapting (or: changing or varying) the radiation characteristic of the at least one radiation source

The monitoring in the operation according to d3) may involve, for example, a comparison with a constant or variable threshold or threshold function (dependent on time, for example), a threshold band (constant or dependent on time), and/or may involve a monitoring of the course of the CRL over time, which in turn may involve a comparison with one or more given CRL courses or curves and/or a determination of extrema over time, such as maximum or minimum values appearing in the of the CRL curve.

The radiation characteristic may relate to at least one parameter selected from: the frequency, the amplitude, and the phase of the irradiated electromagnetic radiation. The changing in the operation according to d4) may involve changing at least one of these parameters, in particular changing one, two, or all three parameters.

In embodiments, the radiation characteristic of all radiation sources that irradiate electromagnetic radiation into the cavity for heating the one or more objects is changed, in particular changed in a similar or the same way.

According to one of the findings underlying the invention, the CRL represents a variable that is well suitable for tracking or tracing changes occurring with the objects, in particular food objects, upon heating, e.g. heating with electromagnetic radiation. The CRL has also been found suitable for detecting transitions of heated objects between different states, such as the transition of hot water to boiling water, the transition of cake from raw to being well-done, etc. Further, it has been found that the CRL is suitable for semi-automatically or automatically conducting and controlling a heating, in particular a cooking process. Such a control is in particular possible, based on the CRL, without explicit knowledge on the kind or type of object(s) placed within the cavity, and without knowledge of the amount, volume or weight of the object(s) present in the cavity. Therefore, the appliance and the closed loop control as suggested herein provide a possibility for improving automated cooking, in particular in connection with dielectric cooking. It shall however be noted, that the scanning process as described above may be used even in cases where the heating or cooking is (at least partially) performed using a different heating technology such as induction, convection, radiant heating etc.

In embodiments, the appliance may comprise a plurality of radiation sources, such as two, three four or even more than four. In such embodiments, the control unit is adapted to control all of the radiation sources. In particular the control unit may be adapted to change, in the operation according to d4), the radiation characteristic of at least one of the plurality of radiation sources. The control unit may be configured to change the radiation characteristic of any of the radiation sources, such as of a single one, of a selected group, or of all radiation sources. Accordingly, the control unit may be adapted to change, in the operation according to d4), the radiation characteristic of all of the radiation sources, in particular substantially at the same time (or: concurrently) for all antennas.

In connection with changing the radiation characteristic of all of the radiation sources, the control unit may be adapted to change, in the operation according to d4), the radiation characteristic of all of the radiation sources in substantially the same way. The same applies if the radiation characteristic is changed for a group of radiation sources, wherein the radiation characteristic for all members of the group may be changed in (substantially) the same way. In preferred embodiments, the radiation characteristic may at least comprise the amplitude of the radiation sources. In particular a change of amplitude may be performed increasing or decreasing the power of the radiation sources so to maintain the same percentage of the emitted power on each radiation source or group over the total emitted power of all the radiation sources or group of radiation sources.

Changing the radiation characteristic in the operation according to d4) in particular results in changing the heating characteristic of the radiation emitted or irradiated into the cavity and impinging on the one or more objects. For example, if the determined CRL is indicative of a particular transition in cooking (from warm to boiling, from frozen to thawed, from raw to well-done etc.), the radiation characteristic may be changed so as to increase or decrease the heating, including stopping one or more or all of the radiation sources.

In embodiments, the appliance, in particular the sensor device, may comprise, for each of the radiation sources, a forward power unit for determining (or: sensing or measuring) a forward power magnitude $FP_i$ associated with radiation emitted by an associated radiation source i (i = 1, 2, ...) into the cavity, and a backward power unit for determining (or: sensing or measuring) a reflected (or: backward) power magnitude $RP_i$ associated with radiation reflected back from the cavity to an associated radiation source i (i = 1, 2, ...). As used herein, the variable i is indicative for a particular radiation source (also referred to as channel) with the maximal value of i corresponding to the maximal number of respectively active radiation sources. The mentioned units may be used to provide the operational parameters needed for calculating the CRL.

As indicated already above, the control unit may be adapted to calculate the compound reflection loss as:

$$CRL = TRP / TFP,$$

with:

- CRL being the compound reflection loss;
- TRP being the total reflected power defined as the sum of the reflected power determined by the backward power units;
- TFP being the total forward power defined as the sum of the forward power determined by the forward power units.

In embodiments, and as already indicated further above, the radiation characteristic may be associated with at least one parameter selected from the group: (radiation) amplitude, (radiation) phase, and (radiation) frequency of the radiation. Preferably, the radiation characteristic includes at least the amplitude, or is the amplitude.

In embodiments, the control unit may be adapted to change, in the operation according to d4), the radiation characteristic to increase or decrease the total forward power magnitude TFP to a value greater than Zero. This may for example be used for increasing or decreasing the heating - depending on the needs mirrored by the CRL. It is, however, also possible that the control unit pauses or to stops at least one of the radiation sources, a group of radiation sources, or all radiation sources. Such an operation may be applied in case that the CRL or other parameters, such as a pre-determined cooking time, indicate the end of a heating or cooking process or of a heating or cooking sub-process in case of heating or cooking procedures involving multiple heating cycles or phases.

In embodiments, the appliance, in particular the control unit, may be adapted to monitor in the operation according to d3) the compound reflection loss against at least one of one or more compound reflection loss thresholds and/or one or more compound reflection loss threshold functions, which may vary with heating or cooking time and/or desired cooking results, for example. Further, it is possible that the monitoring in d3) comprises monitoring the compound reflection loss for the occurrence of a maximum or minimum over time. In this connection, the control unit may monitor and analyse the temporal curve or progression of the CRL over time and identify maxima, minima and/or turning points etc.. Also, the rate of change of the CRL, in particular the increase, slope or gradient over time may be determined and used as a parameter for characterizing the heated objects. In general, the time progression of the CRL may be monitored and analysed for the occurrence of changes of the state of the heated one or more objects (i.e. object(s)).

In embodiments, the appliance, in particular the control unit may be adapted to start, upon detecting in the monitoring according to d3) that the CRL has passed a particular threshold value, in particular a minimum or maximum over time, a heating control routine. The appliance, in particular the control unit, may be adapted to control during the heating control routine, in the operation according to d4), the radiation characteristic of the at least one radiation source such that the CRL remains below and/or above a predetermined reflection loss threshold (e.g. T), or within a predetermined reflection loss threshold band (e.g. [T - $\Delta$; T + $\Delta$]). The reflection loss threshold or the reflection loss threshold band may constant over time, or they may vary with (heating) time. The heating control routine may be associated with a predetermined stop time, and the control unit may be adapted to power off the at least one, in particular one radiation source, a group of radiation sources, or all radiation sources, after expiry of the stop time.

In embodiments, the appliance, in particular the control unit, may be adapted to repeatedly monitor for each of the radiation sources an individual reflected power magnitude $RP_i$ associated with radiation reflected back from the cavity to a respectively individual radiation source. This monitoring may be conducted also for the purpose of avoiding damages to the radiation sources caused by a too high ratio of power reflected from the cavity.

The monitoring in the given embodiment may comprise:

e) determining, while operating the radiation sources at a currently selected radiation characteristic, the individual reflected power magnitude $RP_i$ for each of the radiation sources; and
f) performing a comparison between the determined individual reflected power magnitude $RP_i$ and a, in particular individual, reflected power threshold value associated with the radiation source(s).

The reflected power threshold value may be predetermined, based on a previous measurement, and/or may be an expected or estimated threshold value. Expected or estimated values may for example be based on heuristics. Expected values may for example be based on test cooking procedures where thresholds may be determined for, e.g. particular types of food etc..

The outcome of the comparison in step f) may be used as follows:

- if the comparison in step f) results in one of the determined individual reflected power magnitudes $RP_i$ exceeding the reflected or backward power threshold value, selecting a different radiation characteristic for at least one of the radiation sources, preferably for all of the radiation sources, replacing the currently selected radiation characteristic by the selected different radiation characteristic, and re-executing steps e) and f); and/or
- if the comparison in step f) results in all of the determined individual reflected power magnitudes $RP_i$ being below the reflected power threshold, continuing to operate the radiation sources with the currently selected radiation characteristic. On a note, in this case, even though the comparison does not indicate a need for changing the radiation characteristic, the radiation characteristic may nevertheless be changed based on cooking needs and/or according to expected cooking performances.

By this, if the reflected (or: backward) power magnitude $RP_i$ at one of the radiation sources is too high so as to impair or be suitable for damaging a corresponding radiation source, the appliance, in particular the control unit, may adapt the radiation characteristic by selecting and testing different radiation characteristics, in particular for all radiation sources, until a radiation characteristic is identified or found for which the reflected power magnitude for all of the radiation sources is below corresponding threshold(s). For the purpose of determining the reflected power magnitude $RP_i$, in the operation described beforehand, the control unit may use the values $RP_i$ that are simultaneously determined in connection with determining the CRL.

In embodiments, the appliance, in particular the control unit, is adapted to determine, based on the monitoring according to the operation according to d3), that the cavity is empty, and to power off the radiation source/s in case of such a determination.

In embodiments, the appliance, in particular the control unit, is adapted to compare, in the operation according to d3), the course, in particular the time course, of the determined CRL against a set of predetermined compound reflection loss curves associated with one or more objects suitable for being heated in the cavity. In this connection, the control unit may be configured for recording the time course of the determined CRL and compare the recorded time course against the predetermined (or: given) curves. The predetermined compound reflection loss curves, in particular also the values or curve calculated or determined in connection with the repeated scanning operations for determining the CRL, may be stored, for example, in a memory associated with the control unit.

Further, the predetermined compound reflection loss curves may be stored or be provided in a database, in particular a memory, accessible for the appliance and/or the control unit. The database may, for example, at least in part be stored in a memory of the appliance, in a cloud database, and/or in a knowledge database, the cloud and knowledge database electronically accessible for the appliance for data retrieval, for example via a network connection.

Based on the comparison of the actual curve of the determined CRL with the predetermined compound reflection loss curves, the appliance or the control unit may determine a matching compound reflection loss curve amongst the predetermined compound reflection loss curves. A predetermined compound reflection loss curve may be determined as a match if, for example, it has a same or similar shape and/or distribution of ascending/descending sections and/or distribution of extrema (maxima, minima, turning points etc.). The matching predetermined compound reflection loss curve may be used for controlling, in the operation according to d4), the radiation characteristic in accordance with the matching predetermined compound reflection loss curve. In particular, the radiation characteristic of the radiation source(s) may be controlled such that the CRL determined for the object(s) actually heated substantially follows the predetermined compound reflection loss curve. By this, it is possible to obtain optimal heating/cooking results, and it is possible to fully automate heating or cooking of food and similar objects, based on a CRL curve associated with the object and determined by scanning the cavity as described herein.

In embodiments, it is possible that the appliance, in particular the control unit, identifies, based on the match a heating or cooking scheme or program and applies the cooking program in the operation according to d4). A cooking program may provide heating powers, and/or heating times and similar parameters, and/or radiation characteristics suitable for use in the operation according to d4).

Therefore, based on the scanning operation in connection with determining the CRL, the appliance is suitable for identifying a suitable cooking process for the object placed in the cavity and to automatically heat or cook the object placed in the cavity.

This is in particular based on a finding of the underlying invention that the CRL represents a specific parameter for evaluating and identifying heating states of objects such as food objects. Also, the temporal course of the CRL turned out to be, at least for some kind or types of objects, characteristic for the type or kind of the object (e.g. water, milk, cake etc.) and is suitable for mirroring the heating or cooking stages or phases that the object passes through during heating/cooking.

According to a further aspect of the invention, a method of operating a heating appliance, in particular a cooking appliance, is provided, wherein the appliance may be configured as described in detail above, and may comprise a cavity, a plurality of radiation sources, at least one control unit, and a sensor device. The sensor device may comprise one or more sensors, and/or one or more electronic processing units operatively coupled to the sensor(s) for processing sensor signals of the sensors. The radiation sources are configured for generating and supplying high frequency radiation in the radio frequency range and/or microwave frequency range into the cavity. The cavity and the at least one radiation source are adapted to dielectrically heat, in particular cook, based on radiation absorption, one or more objects, such as foodstuff, placed within the cavity.

The method comprises performing or controlling, by the control unit, a heating process for heating one or more objects placed in the cavity in a closed loop control by:

    i) controlling and operating each of the radiation sources to generate and supply into the cavity a high frequency radiation according to at least one predetermined radiation characteristic associated with a forward power magnitude of radiation emitted into the cavity for the heating, the radiation characteristic associated with at least one parameter selected from the group: amplitude, phase, and frequency;

    ii) continuously and repeatedly during the heating process determining a compound reflection loss calculated as the ratio of the total reflected power magnitude of radiation reflected back from the cavity and the total forward power magnitude of radiation emitted into the cavity by the radiation sources;

    iii) monitoring a course of the determined compound reflection loss; and

    iv) based on the monitoring of the course of the compound reflection loss, changing, in particular adapting, the radiation characteristic of at least one of the radiation sources.

As discussed above, the CRL makes it possible to conduct a cooking process in an automated manner in particular without prior knowledge on the kind or type of object or food placed in the cavity.

Embodiments of the method may comprise or include at least one of the following:

- changing, by the control unit in step iv), the radiation characteristic of all radiation sources, preferably in substantially the same way;
- determining, preferably by a sensor device and/or a database, a forward power magnitude associated with radiation emitted by an associated radiation source into the cavity, and determining, by a sensor device, a reflected power magnitude associated with radiation reflected back from the cavity to an associated radiation source;
- calculating, by the control device, the compound reflection loss as

$$CRL = TRP / TFP,$$

with:

    CRL being the compound reflection loss;
    TRP being the total reflected power defined as the sum of the reflected power determined by the backward power units; and
    TFP being the total forward power defined as the sum of the forward power determined by the forward power units.

- the changing in the operation according to step iv) comprises increasing or decreasing the total forward power magnitude to a value greater than Zero;
- the changing in the operation according to step iv) comprises pausing at least one of the radiation sources, in particular for a predetermined pause time;

- the changing in the operation according to step iv) comprises powering off at least one of the radiation sources, preferably all radiation sources,
- monitoring in the operation according to step iii) the compound reflection loss against at least one of one or more compound reflection loss thresholds and/or one or more compound reflection loss threshold functions, and/or monitoring the compound reflection loss for the occurrence of a maximum or minimum over time;
- powering off the radiation sources if it is determined during the monitoring according to step iii) that the cavity is empty;
- determining for each of the radiation sources a reflected power magnitude of radiation reflected back from the cavity to a respective radiation source with a higher frequency than the frequency for determining the compound reflection loss, and selecting a different radiation characteristic as compared to a current radiation characteristic if at least one of the determined reflected power magnitude exceeds a predetermined reflected power threshold value;
- scanning the cavity comprising one or more objects and determining suitable radiation characteristics for operating the radiation sources.

On a note, the forward power magnitude may be stored in a database, such as a data table, the database communicatively coupled with the appliance and/or a control unit of the appliance, such that the appliance and/or control unit are able to electronically retrieve the forward power magnitude. The values for the forward power magnitude may be stored in the table at the manufacturing site of the appliance, in particular because the forward power magnitude of the radiation sources is generally constant, in particular fixed for specific power levels to be set by the user and/or the appliance during operation, for example.

Further, the method and embodiments thereof as suggested herein may be implemented on the control unit or the appliance such that the appliance and/or the control unit is operable to carry out the method. In particular the control unit may comprise an electronic circuitry, in particular controller (e.g. a processor), and instructions stored on an electronic memory communicatively coupled with the control unit. The instructions are readable and executable by the control unit (e.g. processor), and cause the control unit, when executing the instructions, to carry out method steps according to any embodiment described herein. The control unit may be associated with the appliance and be provided at least partially as a component of the appliance. In embodiments, one or more sections of the control unit or operations to be carried out, may be provided at a remote location, different from the location of the appliance, wherein the remote control unit is communicatively coupled with the appliance for data exchange. For example, computations and other operations to be executed by a processor may be executed via cloud computing, e.g. in a cloud, and the results of the cloud computing or operations may be provided to a control unit of the appliance for use in controlling the appliance, in particular according to the invention described herein.

The method comprises in an embodiment: starting, upon detecting in the monitoring according to step iii), that the compound reflection loss has passed a particular threshold value, in particular a minimum or maximum over time, a heating control routine, and controlling, in the heating control routine in the operation according to step iv), the radiation characteristic of the at least one radiation source such that the compound reflection loss remains below and/or above a predetermined reflection loss threshold, or within a predetermined reflection loss threshold band.

In embodiments, the reflection loss threshold or the reflection loss threshold band is selected to be constant over time or is selected to vary with time. By this, a great variety of different cooking routines may be provided for automatically heating or cooking a wide range of (food) products.

In embodiments, the heating control routine is associated with a predetermined stop time, and the method comprises powering off at least one radiation source, preferably all radiation sources, after expiry of the stop time.

In embodiments, the monitoring of the course of the determined compound reflection loss in step iii) comprises:

- comparing the course of the determined compound reflection loss against a set of predetermined compound reflection loss curves associated with one or more objects suitable for being heated in the cavity by high frequency radiation, and
- determining a matching compound reflection curve amongst the set of predetermined compound reflection loss curves, the matching compound reflection curve corresponding most closely to the course of the determined compound reflection loss, and
- controlling, in the operation according to step iv), the radiation characteristic in accordance with the matching predetermined compound reflection loss curve (the radiation characteristic is controlled or changed such that the determined CRL substantially or greatly follows the matching curve).

In particular, the matching compound reflection loss curve may be associated with a cooking program, and the method may comprise performing, in step iv), the cooking program. The predetermined compound reflection loss curves may be stored on the appliance at the time of first use. However, the range of predetermined compound reflection loss curves available at the appliance may vary with time, wherein the appliance may be adapted to store, record, delete, and/or modify predetermined compound reflection loss curves. In particular, the appliance may be adapted to record CRL curves when carrying out a (full) cooking procedure, and to store the recorded CRL curve in association with the cooking procedure, for retrieval in subsequent operations, e.g. in connection with determining matching CLR curves. Also, based on such recorded CLR curves, the appliance, in particular the control unit, may be capable of, at least semi-automated, self-learning, for example by storing and classifying or grouping similar CLR curves and assigning such groups to cooking programs etc.

As can be seen from the above discussion the appliance and method as suggested herein provides advantages with regard to cooking automation, in particular automation without prior knowledge on the kind or type of objects or food to be heated or cooked in the cavity of the appliance.

**Brief description of the drawings**

Exemplary embodiments and aspects of the underlying invention will in the following be described in connection with the annexed figures, in which:

FIG. 1    shows a schematic representation of an appliance for heating or cooking an object;

FIG. 2    shows an exemplary flow chart of a closed loop control process;

FIG. 3    shows a temporal sequence of schematic images in the course of heating a load, such as milk as the object;

FIG. 4    shows a diagram of the determined CRL over time associated with the heating depicted in FIG. 3;

FIG. 5    shows an exemplary flow diagram for cooking milk or other liquids;

FIG. 6    shows an exemplary flow diagram for cooking cream; and

FIG. 7    shows an exemplary flow diagram for cooking cake.

**Description of exemplary embodiments**

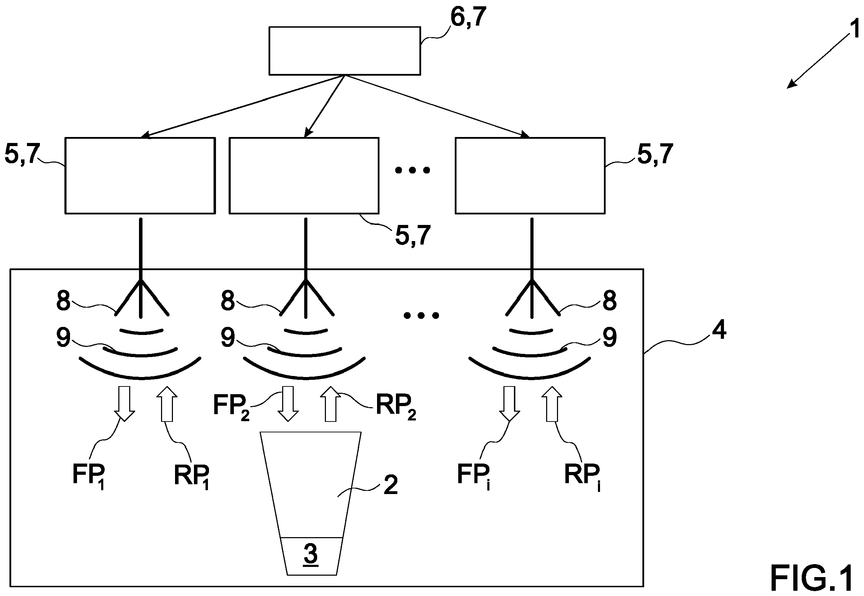

FIG. 1 shows a schematic representation of an appliance 1, in particular a cooking appliance, for heating or cooking an object such as food, which is generally referred to as load 2 below. In the present example, the load 2 is a glass comprising some milk 3.

The appliance 1 comprises a cavity 4, a plurality of radiation sources 5, at least one control unit 6, and a sensor device 7. The sensor device 7 is implemented in part in connection with the radiation sources 5 and the control unit 6.

The sensor device 7 includes several sensors (not shown in the figures) for sensing the forward power magnitude $FP_i$ and/or the reflected power magnitude $RP_i$ for the radiation sources, with i being an integer 1, 2, 3, ... respectively associated with one of the radiation sources 5.

Each radiation source 5 is associated with one or more antenna 8 for irradiating electromagnetic radiation 9, e.g. in the radiofrequency range and/or microwave range, into the cavity 4.

In FIG. 1, a forward power magnitude $FP_i$ is schematically illustrated by an arrow pointing away from a corresponding antenna 8, and the reflected power magnitude $RP_i$ is schematically illustrated by an arrow pointing towards the antenna 8.

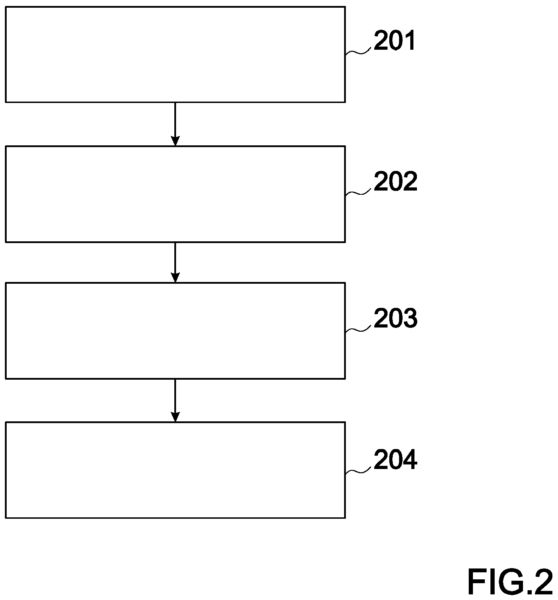

For heating the load 2, in particular the milk 3 in the glass, the control unit 6 performs a closed loop control as described in further detail above and as shown in FIG. 2.

In a first step 201, the control unit 6 controls and operates the radiation sources 5 to generate and supply into the cavity 4 a high frequency radiation 8 according to at least one radiation characteristic associated with a forward power magnitude $FP_i$ of radiation 8 emitted into the cavity 4 for heating the load 2, 3.

The radiation characteristic is associated with at least one parameter selected from the group: amplitude, phase, and frequency. The radiation characteristic may be associated with a vector $v_i$ defining the amplitude $a_i$, the phase $p_i$, and the frequency $f_i$ ($v_i = (a_i, p_i, f_i)$) for operating a radiation source 5 or the radiation sources 5.

In a second step 202, the control device 6, based on values determined by the sensor device, continuously and repeatedly determines, during the overall process of heating the load 2, the compound reflection loss CRL calculated as described further above:

$$CRL = TRP / TFP.$$

with

$$TRP = RP_1 + RP_2 + \ldots RP_i$$

$$TFP = FP_1 + FP_2 + \ldots FP_i$$

In a third step 203 the control unit 6 monitors a course of the determined compound reflection loss CRL.

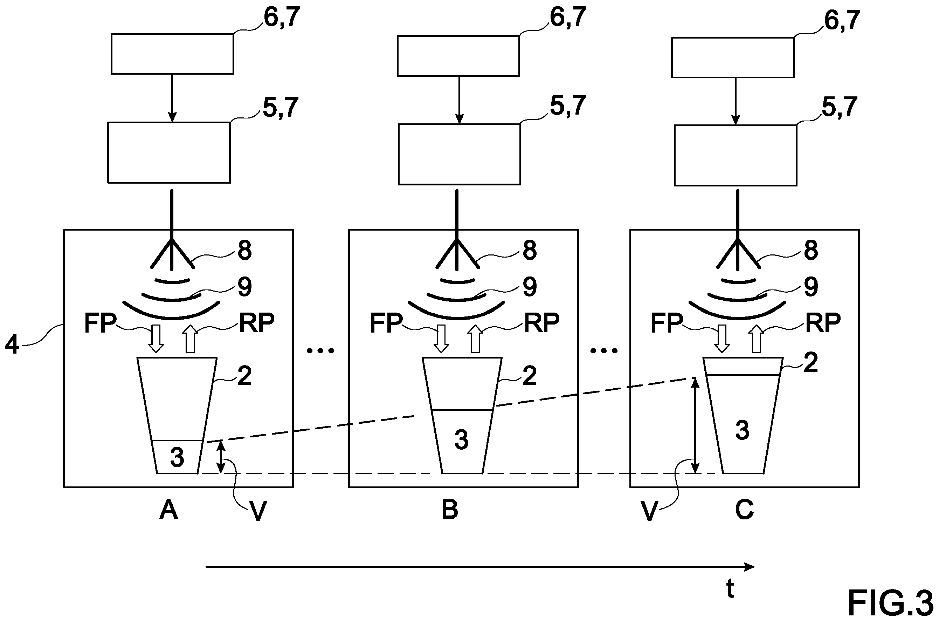

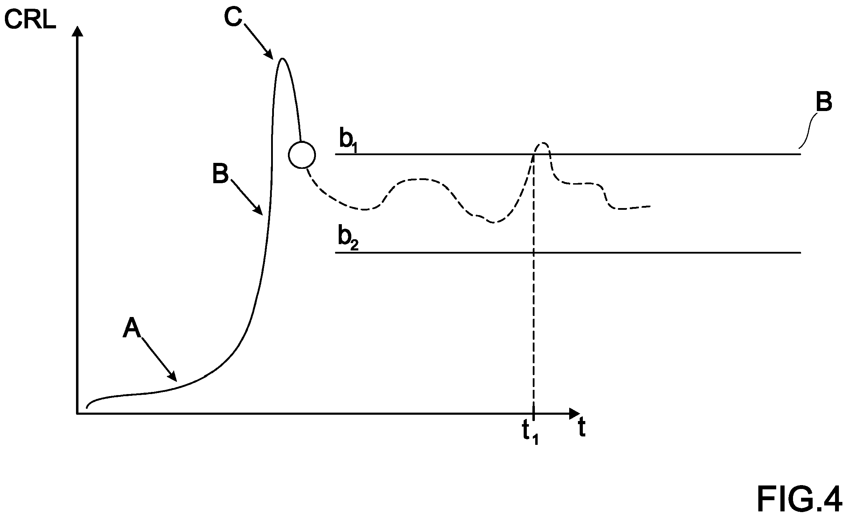

In a fourth step 204 of the closed loop control, the control unit 6, based on the monitoring of the course of the compound reflection loss CRL, changes the radiation characteristic $v_i = (a_i, pi, f_i)$ of at least one of the radiation sources 5, preferably of all of the radiation sources, e.g. in a similar or substantially the same way. As a note, the radiation characteristic may be changed if the monitoring result indicates a necessity of a change and/or if cooking performance necessitates a change. Or in other words, step 204 involving a change in the radiation characteristic need not be carried out in any case after executing step 203. Rather, the radiation characteristic is changed whenever the monitored CRL indicates the necessity for a change. As an example, a maximum of the time course of the monitored CRL may be an indicator for changing the radiation characteristic. This is explained in connection with an example in figures 3 and 4.

FIG. 3 shows a temporal sequence of schematic images in the course of heating the load with the radiation 9, such as milk, and FIG. 4 shows a diagram of the CRL determined in the course of the heating.

The leftmost image A in FIG. 3 depicts the starting point of heating the load 2. As can be seen, the volume of the load is still small. In the course of heating, the volume V of the load 2 (milk 3) increases, which is depicted in the middle image B and rightmost image C and indicated by dashed lines as well as vertical double arrows. The volume increase is typical for milk 3 (and may also be typical for other food objects in response to being heated), with tending to expand and foam at or close to cooking. On a note, also the increase in temperature as such leads to a certain extent of expansion However, the particular behaviour for different kinds of food may be different, and the example given here in connection with milk shall not be limiting for other types of food.

FIG. 4 shows the CRL determined by the control unit 6 over time t for the cooking process, with the phases shown in FIG. 3 being labelled in FIG. 4 as A, B, and C. As can be seen, in the still cold state of the milk 3, the CRL increases comparatively slowly. As heating continues, and as the heating progresses proceeds towards the cooking point, the CRL significantly and comparatively quickly increases and passes through a maximum at C. Thereafter, i.e. after passing the maximum at C, the CRL decreases again, which is indicative of boiling milk 3.

In the closed control loop carried out for the load 2, i.e. milk 3, the control unit monitors the CRL values which are determined repeatedly during the heating (alternatingly scanning the cavity for determining the CRL and the $RP_i$, and heating the load 2). The control unit 6 as such may analyse and monitor the CRL curve and determine that the CRL has passed, at C, a maximum. The control unit 6 may be adapted, e.g. programmed, to identify the maximum at C as associated with boiling milk 3 or milk being close to boiling. In response to such an identification, the control unit 6 can reduce the TFP of the radiation sources 5 or stop the heating process as a whole. If desired, or for other food typologies, the heating may be continued at reduced power. For example, e.g. in case of hot chocolate or creams or muffins or others, after the initial increase of volume (e.g. corresponding to phases A, B, C in FIG. 4), the heating might be continued with the control unit 6 adapted to keep the CRL between the threshold b1 e b2 until the desired cooking level is reached and/or until the CRL cannot be kept in a stable way within the two thresholds.

The appliance may inform the user accordingly, and, for example, provide a message on a display of a user interface, the message including the determined cooking state or cooking temperature.

The control unit 6 may compare the time course of the CRL with stored predetermined compound reflection loss curves and identify, based on a matching predetermined compound reflection loss curve, cooking or heating instructions for changing the radiation characteristic in step 204. Based on these instructions, the control unit 4 may control the radiation devices 5 accordingly, and control the heating according to the matching curve.

As mentioned, the control unit 6 may stop the radiation sources 5 after the CRL has passed the maximum. In other cooking schemes, the control unit 6 may proceed to power the radiation sources 5 such that the CRL remains within a threshold band B in particular below the upper threshold b1 and above the lower threshold b2. In the Example given in FIG. 4, at time point t1, the CRL exceeds the upper threshold b1. The control unit 6 determines this condition in the monitoring step 203 and proceeds to step 204 for changing the radiation characteristic of the radiation sources 5 such that the CRL is within the threshold band again. In case that the control unit 6 cannot find a suitable radiation characteristic fulfilling the threshold condition and all other conditions, the control unit 6 may stop the heating, or carry out a further scanning routing for determining possible radiation characteristics.

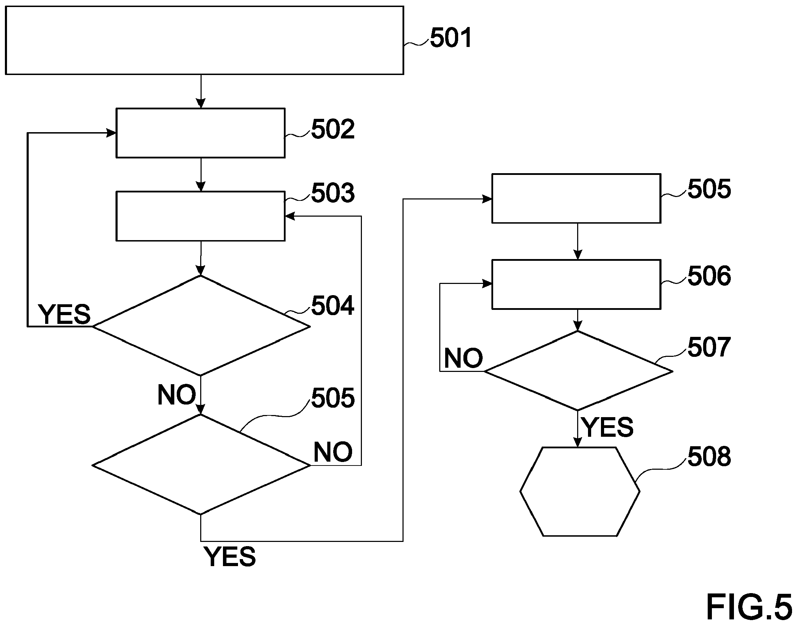

FIG. 5 shows an exemplary flow diagram for cooking milk. In step 501, the control unit 6 operates the radiation sources 5 and the sensor device 7 to irradiate electromagnetic radiation generated by the radiation sources 5 into the cavity for scanning the cavity and the load inside the cavity. Once it is detected that the cavity is not empty, the control device determines, for each radiation source 6, referred to below also as channels, an initial reflected power magnitude $RP_i(t=0)$ and an initial total reflected power TRP (t0).

In step 502, the control unit 6 selects one or more suitable radiation characteristics $v_i = (a_i, p_i, f_i)$ and operates the radiation sources accordingly to heat the load.

In step 503, the control unit 6 determines the reflected power for each channel $RP_i$ and determines the CRL.

Upon measuring the reflected power for each channel $RP_i$, the control unit checks, at 504, for all of the $RP_i$'s whether the reflected power at each radiation source i exceeds a respective threshold $ChTh_i$, wherein $ChTh_i$ is the maximally allowed reflected power for channel i (i.e. for radiation source i). If the condition $RP_i > ChTh_i$ is fulfilled (Yes condition), then the control unit 6 proceeds to step 502 and selects a different radiation characteristic $v_i$ for the radiation sources, wherein the test according to 504 is repeated until $RP_i < ChTh_i$ for all

of the radiation sources (NO condition at 504). This check is carried out repeatedly during the heating process in order to avoid damaging the radiation sources through reflected power from the cavity 4.

If the $RP_i$ for all of the radiation sources is below their associated threshold $ChTh_i$ (No condition), the heating by irradiating the cavity 4 with electromagnetic radiation 9 from the radiation sources 5 is carried out, wherein 505 represents the monitoring of the CRL. In the present example, the monitoring corresponds to checking whether the CRL passes a maximum value. If the CRL has not passed a maximum value (No condition) the closed loop control returns to 503. If it is determined that the CRL has passed or passes a maximum (Yes condition), the method proceeds at 506, where a threshold T is calculated based on the CRL, wherein in the subsequent step 507, heating the load is continued under continued monitoring of the $RP_i$ for each channel and the CRL.

At 508, the control unit 6 determines whether CRL < T, and if this condition is not fulfilled (No condition), the method returns to 507. If this condition is fulfilled (Yes condition), the method ends at 509, representing a point of the heating procedure in which the load has reached its desired temperature, e.g. a boiling point or temperature or at least a temperature close to boiling.

Regarding milk or other liquid food, such loads change their volume during heating-up. The shown process is suitable for detecting milk or other (similar) liquids boiling. The implemented functionality is related to automatically detect milk or liquids boiling (increase in volume) inside a container and to stop the heating process before overflow.

During the heating process each channel reflected power $RP_i$ is measured and feedback is used to avoid channel disruption. Total reflected power TRP and CRL is used as feedback for the food status. For milk or other, in particular similar liquids, boiling, the CRL behaviour has a "bell shape" (maximum). In an initial stage of heating, the CRL increases until a maximum value is reached. In this heating phase the feedback is mostly related to energy absorbed form the food that leads a volume increase. Once the maximum is reached, since the volume increase is related to bubble formation, a drastically decrease of CRL power will be measured. Boiling is detected once the decrease of the CRL after passing the maximum value is lower than the selected threshold T.

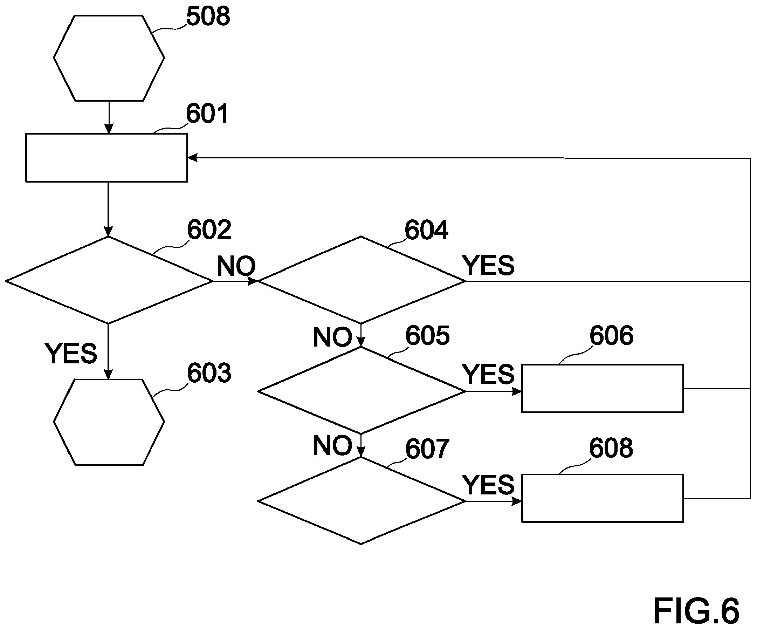

FIG. 6 shows an exemplary flow diagram, involving the claimed closed loop control, for cooking cream, wherein the cooking scheme in FIG. 6 is carried out after detecting cooking according to FIG. 5 (at 508).

According to FIG. 6, boiling is detected at 508, and the control unit 6 selects a subsequent cooking program, where at 601, the $RP_i$ and CRL are monitored in a procedure corresponding to 503 (which is not explicitly shown in FIG. 5).

At 602 the control unit 6 determines whether a set cooking time for the cooking program is over. If this is the case (Yes condition), the cooking ends at 603.

If the cooking time is not over (No condition) the method proceeds with cooking and the control unit monitors at 604 the CRL whether the CRL is and remains in a threshold band [T - Δ; T + Δ]. Or in other words, the control unit 6 checks whether the condition

$$T - \Delta < \text{CRL} < T + \Delta$$

is met.

If this condition is true (Yes at 604) the method proceeds with 601, i.e. continued cooking with monitoring $RP_i$ and CRL.

If this condition is not true (No at 604), the control circuit proceeds to 605 and checks whether the CRL is below T - Δ. If the condition CRL < T - Δ is true (Yes at 605), which in the case of cream is indicative of insufficient heating power supply, the control unit 6 proceeds to 606 involving increasing the power delivered into the cavity. Once the control circuit 6 has increased the power by changing the radiation characteristic, the routine continues with heating and jumps back to 601.

If the condition is not true (No at 605), the control unit 6 checks at 607 whether the condition CRL > T + Δ is true. This condition is indicative that the cooked cream requires less power. Accordingly, if the condition is true (Yes at 607), the control unit decreases the power supplied to the cavity in step 608 by changing the radiation characteristic accordingly and continues with cooking (jump to 601).

This routine and control of the heating is continued until the control unit 6 determines that the cooking time has expired (602) and then the control unit 6 stops the cooking process.

The embodiment of FIG. 6 shows an example, in which, after boiling, an additional cooking phase is carried out. A typical example is cream or chocolate where, after the increase of volume due to boiling, there is the need of increasing consistency (e.g. reducing the amount of water by continued heating). In the given example, this target condition is obtained by adding an additional cooking phase associated with a given cooking time and heating power that is related to the food quantity and requested consistency. As can be seen, not only boiling, but also obtaining desired consistencies of food may be obtained by the closed loop control involving the CRL as suggested herein.

In the example of FIG. 6, the cooking process involves changing, based on the monitored CRL, the amount of power radiated into the cavity, corresponding to a change in the power level of the channels, i.e. radiation sources.

A change of the power to be irradiated into the cavity may be performed by preserving the ratio of feed power between all the channels involved in power delivery. A way to perform such type of relation is to change the power setpoint for the channels in a fixed percentage related to the sum of all the channels.

A typical stop condition for ending the cooking or heating at 603 may be a selected time, or may be automatically determined, for example if the CRL exceeds a predefined value (threshold) or when the control unit 6 is not able any more to select a radiation characteristic that fulfils all of the required conditions for $RP_i$ and CRL, in particular with regard to the threshold band [T - $\Delta$; T + $\Delta$]

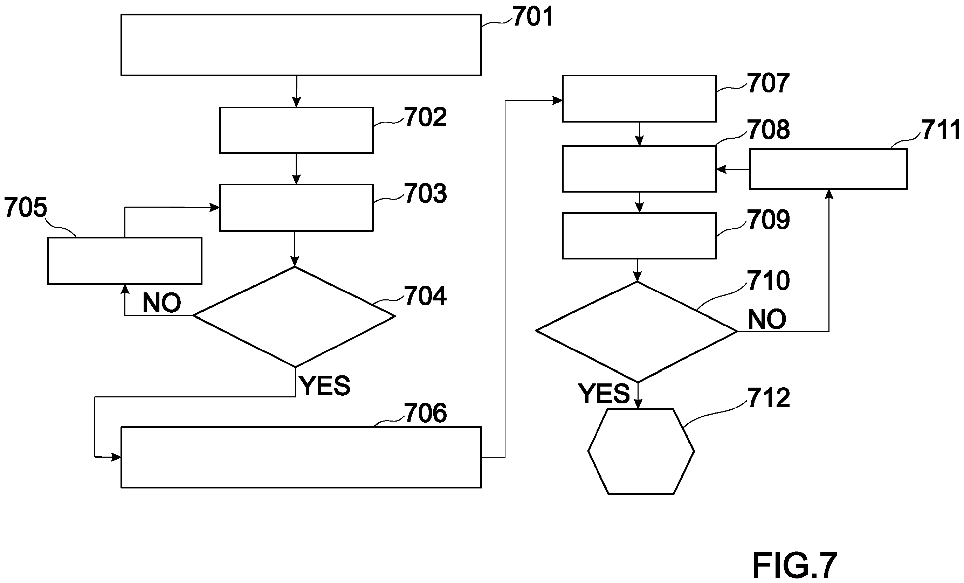

FIG. 7 shows an example flow diagram associated with a routine for cooking cake. Steps 701 to 703 correspond to steps 501 to 503, and reference is made to the discussion above.

At 704, the control unit 6 checks whether the condition CRL = Max (i.e. CRL is maximal) or whether a pre-set cooking time is reached. In this cooking scheme, the cake is heated for a predetermined time or until the CRL reaches a maximum.

If none of these conditions is met (No condition at 704), the control unit proceeds to 705 and changes the radiation characteristic of the channels. If one of these conditions is met (Yes condition at 704) a first cooking phase is over, and the control unit 6 proceeds at 706 representing a starting point for a subsequent cooking phase.

The steps 706 to 708 of the second cooking phase correspond to the operation according to 501 to 503, and reference is made to the discussion above.

At 709, the control circuit 6 updates a power setpoint for each channel, e.g. pursuant to a given cooking protocol or scheme. This means, the second cooking phase is associated with a different power setpoint for heating the load.

At 710, the control unit 6 checks:

- whether a pre-defined cooking time has expired; or
- whether a cooking threshold is reached (CRL has reached the threshold).

If none of these conditions is met (No condition at 710), the control unit 6 proceeds to 711 and changes the radiation characteristic of the radiation sources and continues cooking.

If one of these conditions is met (Yes condition at 710), the control unit stops the cooking process at 712.

As can be seen, the same closed loop control based on the CRL can be used for multi-stage cooking processes involving different cooking demands and requirements in respective different cooking stages. In the given example a first cooking phase or stage based on the conditions defined according to 704, and a second cooking phase or stage based on the conditions defined according to 710 is carried out. Such a procedure is suitable for cooking cake. The identification of the load as cake may be carried out based on a comparison of the time course of the CRL with predetermined CRL curves stored in a memory of the appliance or accessible for the appliance. Once the type of kind, e.g. cake, has been identified, the control unit 6 may then select the cooking scheme as described in connection with FIG. 7, for example, and automatically carry out the cooking process.

Regarding the scheme according to FIG. 7, a large category of food exploits an initial increase in volume followed by a loss of humidity related to the cooking process, such as desserts, cupcakes, or cake.

In case of a large cake, for example, one of the food quality to be considered is the uniformity in cooking to achieve a suitable result. To achieve this, several combination of radiations may be used over time, i.e. the radiation characteristic may be varied over time (e.g. as in 711), with the overall power being finely tuned to obtain adequate cooking.

In the scheme according to FIG. 7, a particular radiation characteristic (frequency/phase/amplitude) may be applied at the start of cooking process. This cooking phase is mostly characterized by an increase of food volume that is monitored based on the CRL as compared to the initial CRL at the beginning of the cooking process. In later cooking phases, the radiation characteristic (frequency/phase/amplitude) is varied over time according to a given dataset or cooking scheme, for example. This operation may be continued until the increase of volume comes to a standstill, for example. In this phase, the control circuit may record the variation of the channel reflected power $RP_i$, and if one of the values $RP_i$ exceeds a preferred value, it may be deleted from the initial dataset corresponding to the cooking scheme.

The first cooking phase (steps 701 - 705) may stop, for example, when the CRL, exceeds a selected threshold.

In the subsequent cooking phase, cooking is mostly related to removing humidity from food due to the increase in temperature, which is typical for a cooking process. This subsequent phase begins with a refresh of the dataset that may be used for scanning the food and the cavity. To achieve cooking uniformity the radiation characteristic of the radiation sources 5 is varied over time, in a random or predefined, e.g. circular, way, and as fast as is possible. If a selected radiation characteristic increases drastically the reflected power $RP_i$ on some channels, so as to be not considered allowable for electronics components, it may be erased from the dataset available for changing the radiation characteristic.

In the subsequent cooking phase a power regulation may be performed to achieve a required delivery of power or to increase the capability of a solution for the radiation characteristic (amplitude, phase, frequency) to be inside the allowable band for the channels reflected power $RP_i$.

The cooking phase may end once a preferred time is expired or when the CRL is outside the regulation bands, or when, for all the radiation characteristics included in the dataset underlying the cooking process, all radiation characteristics result in a $RP_i$ that is larger than the allowable channel reflected power magnitude. An option for this case may be to reacquire a whole dataset of possible and suitable radiation characteristics (amplitude, phase, frequency) and to continue the cooking process based on the new dataset of radiation characteristics (solutions) to be applied to the radiation sources 5.

As indicated, the radiation characteristics that are applied to the radiation sources 5 by the control unit 6, e.g. in step 204 (FIG. 2), for changing the radiation characteristic based on the determined CRL, may be based on acquired sets of radiation characteristics. For changing the radiation characteristic in the closed loop control, the control unit 6 may access the previously acquired sets of radiation characteristics and select a corresponding one according to a defined scheme or randomly.

In all, the above examples show that the suggested method and appliance are suitable for improving cooking, in particular cooking based on electromagnetic radiation such as radio-frequency and microwave frequency radiation.

**List of reference numerals**

| 1 | appliance |
| 2 | load |
| 3 | milk |
| 4 | cavity |
| 5 | radiation source |
| 6 | control unit |
| 7 | sensor device |
| 8 | antenna |
| 9 | electromagnetic radiation |
| V | volume |
| B | threshold band |

**Claims**

1. A heating appliance (1), in particular cooking appliance, comprising a cavity (4), at least one, preferably a plurality of, radiation sources (5), at least one control unit (6), and at least one sensor device (7); wherein

   a) the at least one radiation source (5) arranged and configured for generating and supplying high frequency radiation (9) in the radio frequency range and/or microwave frequency range into the cavity (4),
   b) the cavity (4) and the at least one radiation source (5) adapted to heat or cook, in particular dielectrically heat or cook, based on radiation absorption, one or more objects (2, 3), such as foodstuff, placed within the cavity (4),
   c) the control unit (6) adapted to determine, based on sensor signals from the sensor device (7) a compound reflection loss(CRL) defined as the quotient of the total reflected power magnitude (TRP) reflected back from the cavity (4) in response to supplying the radiation (9) into the cavity (4) and the total forward power magnitude (TFP) of the radiation (9) supplied by all of the radiation sources (5) into the cavity (4) and;
d) the control unit (6) adapted to control a heating process (501 - 508; 601 - 608, 701 - 712) for heating the one or more objects (2, 3) in a closed loop control, the closed loop control comprising:

   d1) controlling (201) and operating the at least one radiation source (5) to generate and supply into the cavity (4) a high frequency radiation (9) according to at least one radiation characteristic associated with a forward power magnitude (FP);
   d2) continuously and repeatedly during the heating process determining (202) the compound reflection loss (CRL) calculated as the ratio of the total reflected power magnitude (TRP) of radiation reflected back from the cavity (4) and the total forward power magnitude (TFP) of radiation emitted into the cavity (4) by the at least one radiation source (5);
   d3) monitoring (203) the determined compound reflection loss (CRL); and
   d4) based on the monitoring of the compound reflection loss (CRL), adapting (204) the radiation characteristic of the at least one radiation source (5).

2. The Appliance (1) according to claim 1, comprising a plurality of radiation sources (5), wherein the control unit (6) is adapted to change in the operation according to d4) the radiation characteristic of at least one of the plurality of radiation sources (5).

3. The Appliance (1) of claim 2, wherein the control unit (6) is adapted to change in the operation according to d4) the radiation characteristic of all of the radiation sources (5).

4. The Appliance (1) according to claim 2 or 3, wherein the control unit (6) is adapted to change in the operation according to d4) the radiation characteristic, in particular at least the amplitude, of all of the radiation sources (5) in substantially the same way.

5. The Appliance (1) according to any of claims 2 to 4, the sensor device (7) comprising, for each of the radiation sources (5) ,

   a forward power unit for determining a forward power magnitude (FP$_i$) associated with radiation (9) emitted by an associated radiation source (5) into the cavity (4), and
a reflected power unit for determining a reflected power magnitude ($RP_i$) associated with radiation (9) reflected back from the cavity (4) to an associated radiation source (5).

**6.** The Appliance (1) according to claim 5, wherein the control unit (6) is adapted to calculate the compound reflection loss (CRL) as:

$$CRL = TRP / TFP,$$

with:

- **CRL** being the compound reflection loss;
- **TRP** being the total reflected power defined as the sum of the reflected power determined by the backward power units;
- **TFP** being the total forward power defined as the sum of the forward power determined by the forward power units.

**7.** The Appliance (1) according to one or more of the preceding claims, wherein the radiation characteristic is associated with at least one parameter selected from the group: amplitude, phase, and frequency.

**8.** The Appliance (1) according to claim 7, wherein the control unit (6) is adapted to change in the operation according to d4) the radiation characteristic to increase or decrease the total forward power magnitude (TFP) to a value greater than Zero, or to pause or to stop at least one of the radiation sources (5), preferably all radiation sources (5).

**9.** The Appliance (1) according to one or more of the preceding claims, wherein the control unit (6) is adapted to monitor in the operation according to d3) the compound reflection loss (CRL) against at least one of one or more compound reflection loss thresholds (B) and/or one or more compound reflection loss threshold functions, and/or to monitor the compound reflection loss (CRL) for the occurrence of a maximum (C) or minimum over time.

**10.** The Appliance (1) according to claim 9, wherein the control unit (6) is adapted to start, upon detecting in the monitoring according to d3) that the compound reflection loss (CRL) has passed or reached a particular threshold value, in particular a minimum or maximum over time, a heating control routine, and wherein the control unit (6) is adapted to control during the heating control routine, in the operation according to d4), the radiation characteristic of the at least one radiation source (5) such that the compound reflection loss (CRL) remains below and/or above a predetermined reflection loss threshold (B), or within a predetermined reflection loss threshold band (B), wherein, optionally, the reflection loss threshold (B) or the reflection loss threshold band (B) being constant over time or varying with time, and/or wherein, further optionally, the heating control routine is associated with a predetermined stop time, and the control unit (6) is adapted to power off the at least one radiation source (5) after expiration of the stop time.

**11.** The Appliance (1) according to one or more of the preceding claims, wherein the control unit (6) is adapted to repeatedly monitoring for each of the radiation sources (5) an individual reflected power magnitude ($RP_i$) associated with radiation reflected back from the cavity (4) to a respectively individual radiation source (5), the monitoring comprising:

e) determining, while operating the radiation sources (5) at a currently selected radiation characteristic, the individual reflected power magnitude ($RP_i$) for each of the radiation sources (5) ;
f) performing a comparison between the determined individual reflected power magnitude ($RP_i$) and a, in particular individual, reflected power threshold value ($ChTh_i$) associated with the radiation sources (5), wherein:

- if the comparison results in one of the determined individual reflected power magnitudes ($RP_i$) exceeding the reflected power threshold value ($ChTh_i$), selecting a different radiation characteristic for at least one of the radiation sources (5), preferably for all of the radiation sources (5), replacing the currently selected radiation characteristic by the selected different radiation characteristic, and re-executing steps e) and f); and/or
- if the comparison results in all of the determined individual reflected power magnitudes ($RP_i$) being below the reflected power threshold ($ChTh_i$), continuing to operate the radiation sources (5) with the currently selected radiation characteristic.

**12.** The Appliance (1) according to one or more of the preceding claims, wherein the control unit (6) is adapted to determine, based on the monitoring according to the operation according to d3), that the cavity (4) is empty, and to power off the radiation sources (4) in case of such a determination.

**13.** The Appliance (1) according to one or more of the preceding claims, wherein the control unit (6) is adapted to compare, in the operation according to d3), the course of the determined compound reflection loss (CRL) against a set of predetermined compound reflection loss curves associated with one or more objects (2, 3) suitable for being heated in the cavity (4), to determine, based on the comparison, a matching compound reflection loss curve, and to control, in the operation according to d4) the radiation characteristic in accordance with the matching predetermined compound reflection loss curve.

14. A method of operating a heating appliance (1), in particular a cooking appliance (1), the appliance (1) comprising a cavity (4), a plurality of radiation sources (5), at least one control unit (6), and a sensor device (7), wherein the radiation sources (5) are configured for generating and supplying high frequency radiation (9) in the radio frequency range and/or microwave frequency range into the cavity (4), the cavity (4) and the at least one radiation source (5) adapted to dielectrically heat, in particular cook, based on radiation absorption, one or more objects (2, 3), such as foodstuff, placed within the cavity (4), the method comprising controlling, by the control unit (6), a heating process (501 - 508; 601 - 608; 701 - 712) for heating one or more objects (2, 3) placed in the cavity (4) in a closed loop control by:

> i) controlling and operating (201) each of the radiation sources (5) to generate and supply into the cavity (4) a high frequency radiation (9) according to at least one pre-determined radiation characteristic associated with a forward power magnitude ($FP_i$) of radiation (9) emitted into the cavity (4) for the heating, the radiation characteristic associated with at least one parameter selected from the group: amplitude, phase, and frequency;
> ii) continuously and repeatedly (202) during the heating process determining a compound reflection loss (CRL) calculated as the ratio of the total reflected power magnitude (TRP) of radiation reflected back from the cavity (4) and the total forward power magnitude (TFP) of radiation emitted into the cavity (4) by the radiation sources (5);
> iii) monitoring (203) a course of the determined compound reflection loss (CTL); and
> iv) based on the monitoring of the course of the compound reflection loss (CRL), changing (204), in particular adapting, the radiation characteristic of at least one of the radiation sources (5).

15. The method of claim 14, comprising at least one of the following:

> - changing, by the control unit (6) in step iv), the radiation characteristic of all radiation sources (5), preferably in substantially the same way;

- determining, preferably by a sensor device (7) and/or from a database, a forward power magnitude ($FP_i$) associated with radiation emitted by an associated radiation source (5) into the cavity (4), and determining, by a sensor device (7), a reflected power magnitude ($RP_i$) associated with radiation reflected back from the cavity (4) to an associated radiation source (5);
- calculating, by the control device (6), the compound reflection loss (CRL) as

$$CRL = TRP / TFP,$$

with:

> CRL being the compound reflection loss;
> TRP being the total reflected power defined as the sum of the reflected power determined by the backward power units; and
> TFP being the total forward power defined as the sum of the forward power determined by the forward power units.

- the changing in the operation according to step iv) comprises increasing or decreasing the total forward power magnitude (TFP) to a value greater than Zero;
- the changing in the operation according to step iv) comprises pausing at least one of the radiation sources (5), in particular for a predetermined pause time;
- the changing in the operation according to step iv) comprises powering off at least one of the radiation sources (5), preferably all radiation sources (5),
- monitoring in the operation according to step iii) the compound reflection loss (CRL) against at least one of one or more compound reflection loss thresholds (B) and/or one or more compound reflection loss threshold functions, and/or monitoring the compound reflection loss for the occurrence of a maximum (C) or minimum over time;
- powering off the radiation sources (5) if it is determined during the monitoring according to step iii) that the cavity (4) is empty;
- determining for each of the radiation sources (5) a reflected power magnitude ($RP_i$) of radiation (9) reflected back from the cavity (4) to a respective radiation source (5) with a higher frequency than the frequency for determining the compound reflection loss (CRL), and selecting a different radiation characteristic as compared to a current radiation characteristic if at least one of the determined reflected power magnitude ($RP_i$) exceeds a pre-determined backward power threshold value;

- scanning the cavity comprising one or more objects and determining suitable radiation characteristics for operating the radiation sources.

16. The method according to claim 14 or 15, comprising: starting, upon detecting in the monitoring (203) according to step iii), that the compound reflection loss (CRL) has passed a particular threshold value, in particular a minimum or maximum and/or turning point over time, a heating control routine, and controlling in the heating control routine in the operation according to step iv) the radiation characteristic of the at least one radiation source (5) such that the compound reflection loss (CRL) remains below and/or above a predetermined reflection loss threshold (B), or within a predetermined reflection loss threshold band (B), wherein, optionally, the reflection loss threshold (B) or the reflection loss threshold band (B) is selected to be constant over time or is selected to vary with time, and/or wherein, further optionally, the heating control routine is associated with a predetermined stop time, and the method comprising powering off at least one radiation source (5), preferably all radiation sources (5), after expiration of the stop time.

17. The method according to one or more of claims 14 to 16,
the monitoring of the course of the determined compound reflection loss (CRL) in step iii) comprising:

- comparing the course of the determined compound reflection loss (CRL) against a set of predetermined compound reflection loss curves associated with one or more objects suitable for being heated in the cavity by high frequency radiation (9), and
- determining a matching compound reflection curve amongst the set of predetermined compound reflection loss curves, the matching compound reflection curve corresponding most closely to the course of the determined compound reflection loss (CRL), and
- controlling, in the operation according to step iv), the radiation characteristic in accordance with the matching predetermined compound reflection loss curve.

FIG.1

FIG.2

EP 4 156 860 A1

FIG.3

EP 4 156 860 A1

FIG.4

FIG.5

FIG.6

```
          ┌─────────────────────────────────┐ ⌐701
          │                                 │
          └─────────────────┬───────────────┘
                            │
                            ▼                              ┌──────────────────┐ ⌐707
          ┌──────────────────────┐ ⌐702                   │                  │
          │                      │                        └────────┬─────────┘
          └──────────┬───────────┘                                 │
                     │                                             ▼
                     ▼                                    ┌──────────────────┐ ⌐708      ┌──────────────────┐ ⌐711
          ┌──────────────────────┐ ⌐703                   │                  │◄─────────│                  │
   ⌐705   │                      │                        └────────┬─────────┘          └──────────────────┘
   │  ┌──►└──────────┬───────────┘                                 │                              ▲
   │  │              │                                             ▼                              │
 ┌─┴──┴─┐            ▼                               ┌──────────────────┐ ⌐709                    │
 │      │      ╱╲                                    │                  │                         │
 └──────┘  NO ╱  ╲ ⌐704                              └────────┬─────────┘                         │
        ◄────╲    ╲                                           │                                   │
              ╲  ╱                                            ▼                                    │
               ╲╱                                        ╱╲    ⌐710                                │
              YES                                   NO  ╱  ╲                                       │
               │                                  ◄────╲    ╲──────────────────────────────────────┘
               ▼                                        ╲  ╱
 ┌──────────────────────────────┐ ⌐706                   ╲╱
 │                              │                        YES
 └──────────────────────────────┘                        │
                                                          ▼
                                                     ⬡  ⌐712
```

FIG.7

Europäisches
Patentamt

European
Patent Office

Office européen
des brevets

# EUROPEAN SEARCH REPORT

Application Number

EP 21 19 9608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/125130 A1 (WHIRLPOOL CO [US]) 5 July 2018 (2018-07-05) * abstract; claim 1; figures 1-47 * * paragraphs [0222], [0224] * ----- | 1-17 | INV. H05B6/70 |
| A | EP 2 051 564 A1 (PANASONIC CORP [JP]) 22 April 2009 (2009-04-22) * abstract; claims 1-4; figures 1-15 * ----- | 1 | |
| A | WO 2011/058537 A1 (GOJI LTD; BILCHINSKY ALEXANDER [IL] ET AL.) 19 May 2011 (2011-05-19) * abstract; claim 1; figures 1-10 * ----- | 1 | |
| A | EP 2 475 221 A1 (PANASONIC CORP [JP]) 11 July 2012 (2012-07-11) * abstract; claim 1; figures 1-5 * ----- | 1 | |

TECHNICAL FIELDS
SEARCHED (IPC)

H05B

The present search report has been drawn up for all claims

| Place of search | Date of completion of the search | Examiner |
|---|---|---|
| Munich | 15 March 2022 | Garcia, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.
                                                                    EP 21 19 9608

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2022

| Patent document cited in search report | Publication date | Patent family member(s) | Publication date |
|---|---|---|---|
| WO 2018125130 A1 | 05-07-2018 | EP 3563636 A1 | 06-11-2019 |
|  |  | US 2019150233 A1 | 16-05-2019 |
|  |  | WO 2018125130 A1 | 05-07-2018 |
| EP 2051564 A1 | 22-04-2009 | BR PI0714770 A2 | 16-07-2013 |
|  |  | CN 101502170 A | 05-08-2009 |
|  |  | EP 2051564 A1 | 22-04-2009 |
|  |  | EP 3051925 A1 | 03-08-2016 |
|  |  | JP 5064924 B2 | 31-10-2012 |
|  |  | JP 2008066292 A | 21-03-2008 |
|  |  | RU 2399170 C1 | 10-09-2010 |
|  |  | US 2010176121 A1 | 15-07-2010 |
|  |  | WO 2008018466 A1 | 14-02-2008 |
| WO 2011058537 A1 | 19-05-2011 | CN 102597792 A | 18-07-2012 |
|  |  | CN 102598851 A | 18-07-2012 |
|  |  | CN 104540261 A | 22-04-2015 |
|  |  | CN 105407565 A | 16-03-2016 |
|  |  | CN 106028495 A | 12-10-2016 |
|  |  | EP 2499505 A1 | 19-09-2012 |
|  |  | EP 2499880 A1 | 19-09-2012 |
|  |  | EP 2587887 A2 | 01-05-2013 |
|  |  | EP 2914062 A1 | 02-09-2015 |
|  |  | EP 2916619 A1 | 09-09-2015 |
|  |  | EP 3154314 A1 | 12-04-2017 |
|  |  | ES 2534411 T3 | 22-04-2015 |
|  |  | JP 5657016 B2 | 21-01-2015 |
|  |  | JP 5713411 B2 | 07-05-2015 |
|  |  | JP 6057354 B2 | 11-01-2017 |
|  |  | JP 6271402 B2 | 31-01-2018 |
|  |  | JP 2013510399 A | 21-03-2013 |
|  |  | JP 2013510414 A | 21-03-2013 |
|  |  | JP 2015079761 A | 23-04-2015 |
|  |  | JP 2015135823 A | 27-07-2015 |
|  |  | KR 20120082031 A | 20-07-2012 |
|  |  | KR 20120116407 A | 22-10-2012 |
|  |  | KR 20160011703 A | 01-02-2016 |
|  |  | US 2012312801 A1 | 13-12-2012 |
|  |  | US 2013062334 A1 | 14-03-2013 |
|  |  | US 2013087545 A1 | 11-04-2013 |
|  |  | US 2017027026 A1 | 26-01-2017 |
|  |  | US 2017164431 A1 | 08-06-2017 |
|  |  | US 2019364624 A1 | 28-11-2019 |
|  |  | US 2021227652 A1 | 22-07-2021 |
|  |  | WO 2011058537 A1 | 19-05-2011 |
|  |  | WO 2011058538 A1 | 19-05-2011 |

EPO FORM P0459

For more details about this annex : see Official Journal of the European Patent Office, No. 12/82

**page 1 of 2**

## ANNEX TO THE EUROPEAN SEARCH REPORT
## ON EUROPEAN PATENT APPLICATION NO.

EP 21 19 9608

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2022

| Patent document cited in search report | Publication date | Patent family member(s) | Publication date |
|---|---|---|---|
| EP 2475221 A1 | 11-07-2012 | CN 102484908 A | 30-05-2012 |
| | | EP 2475221 A1 | 11-07-2012 |
| | | JP 5648257 B2 | 07-01-2015 |
| | | JP WO2011027529 A1 | 31-01-2013 |
| | | RU 2012108098 A | 10-10-2013 |
| | | US 2012152940 A1 | 21-06-2012 |
| | | WO 2011027529 A1 | 10-03-2011 |